Europäisches Patentamt

European Patent Office

Office européen des brevets

(19)

(11) **EP 1 345 216 A2**

(12) **EUROPEAN PATENT APPLICATION**

(43) Date of publication:
**17.09.2003 Bulletin 2003/38**

(51) Int Cl.⁷: **G11B 7/135**

(21) Application number: **03005355.7**

(22) Date of filing: **12.03.2003**

(84) Designated Contracting States:
**AT BE BG CH CY CZ DE DK EE ES FI FR GB GR HU IE IT LI LU MC NL PT SE SI SK TR**
Designated Extension States:
**AL LT LV MK RO**

(30) Priority: **14.03.2002 JP 2002069987**

(71) Applicant: **VICTOR COMPANY OF JAPAN, LIMITED**
**Yokohama-Shi Kanagawa-Ken 221 (JP)**

(72) Inventor: **Itonaga, Makoto**
**Yokohama-shi, Kanagawa-ken (JP)**

(74) Representative: **HOFFMANN - EITLE**
**Patent- und Rechtsanwälte**
**Arabellastrasse 4**
**81925 München (DE)**

(54) **Optical pickup**

(57)    An optical pickup suppresses aberration including one caused when the optical axis of an objective lens deviates from that of a chromatic aberration corrector.

The optical pickup emits light to a track on an optical disk and records/regenerates information signals to/from the optical disk. The optical pickup has the objective lens (19) whose movement is controlled in a diametral direction of the optical disk, to focus the emitted light on the track on the optical disk, a fixed triplet (18) to correct axial chromatic aberration of the objective lens, and a beam expander (17) to correct spherical aberration of the objective lens. The triplet corrects an error in a focusing direction caused by chromatic aberration.

FIG.1

**Description**

BACKGROUND OF THE INVENTION

1. Field of the Invention

The present invention relates to an optical pickup that emits a beam to an optical disk and records and regenerates information signals to and from the optical disk.

2. Description of the Related Art

Optical disks, or optical recording media are used to store information signals or data including motion picture data, voice data, and computer data. The optical disks are mass-producible at low cost, and therefore, are widely used. Increasing requests for the optical disks are to improve the recording density and capacity thereof.

To improve the recording density of an optical disk, there are two approaches. One is to shorten the wavelength of light used to read data from the optical disk. The other is to increase the numerical aperture (NA) of an objective lens used to focus light on the optical disk.

When CDs (compact disks) were developed into DVDs (digital versatile disks or digital video disks), the wavelength was shortened from 780 nm to 650 nm and the objective-lens NA was improved from 0.45 to 0.60, thereby achieved a density improvement of about seven times from 650 MB to 4.7 GB (one side).

Recordable optical disks employ nearly the same wavelength and NA as those mentioned above, irrespective of their types such as a magneto-optical type and a phase change type.

A typical optical pickup presently used to read/write an optical disk employs a single objective lens formed from glass or resin. The objective lens has aspherical end surfaces to correct aberration. Lenses of this type are mass-producible by molding at low cost, and therefore, are widely used.

To further improve the recording density and capacity of an optical disk, a pickup employing a blue laser as well as an objective lens having a high NA must be developed.

An optical pickup employing a light source of 450 nm or shorter in wavelength and an objective lens of 0.7 or greater in NA must simultaneously correct axial chromatic aberration and spherical chromatic aberration. The axial chromatic aberration is a focal point variation due to a wavelength variation, and the spherical chromatic aberration is spherical aberration due to a wavelength variation. In this specification, the spherical chromatic aberration is called wavelength-error-based spherical aberration.

The reason why the objective lens having an NA of 0.7 or greater and employing a light source of 450 nm or shorter in wavelength necessitates the correction of axial chromatic aberration and wavelength-error-based spherical aberration will be explained.

First, the light of 450 nm in wavelength causes large dispersion by optical material such as glass of the objective lens, to produce large axial aberration and large spherical aberration.

Second, the increased NA of the objective lens increases refraction angles along the periphery of the lens. Even a small wavelength variation causes a large refraction angle change, to cause large spherical aberration.

The axial chromatic aberration and wavelength-error-based spherical aberration are each chromatic aberration. They, however, are caused by different reasons and have different characteristics.

The axial chromatic aberration is caused in an optical pickup by wavelength spread due to superimposed high frequencies applied to a laser diode, by a sudden wavelength variation due to a sudden power change at the laser diode during the recording of an optical disk, or by a wavelength error due to an individuality of the laser diode.

The axial chromatic aberration due to power change suddenly occurs in synchronization with a power change. This sudden change is difficult to follow by a focus servo mechanism that drives an objective lens of the optical pickup in a focusing direction. A range of wavelengths that must be coped with is about ±1 to ±2 nm. In the case of a laser diode employing superimposed high frequencies, it simultaneously emits beams of different wavelengths to a lens, and therefore, always causes focus errors in connection with wavelengths other than a reference wavelength.

If the optical pickup receives wavelengths spreading in a certain range or encounters a sudden wavelength variation, it will cause a focusing error due to axial chromatic aberration. This focusing error (defocusing) is severe, and therefore, must be corrected.

The wavelength-error-based spherical aberration is caused by wavelength variations due to the individuality of a laser diode and by changes in the temperature of the laser diode.

The wavelength-error-based spherical aberration is stable or changes relatively slowly, and a range of wavelengths that must be coped with is about ±5 to ±10 nm.

To solve the problems of axial chromatic aberration and wavelength-error-based spherical aberration, Japanese Patent Laid-Open Publication No. 6-250081 discloses a bonded chromatic aberration correction element. This element includes an aspherical bonded face to correct both the axial chromatic aberration and wavelength-error-based spherical aberration.

Japanese Patent Laid-Open Publication No. 6-82725 discloses a chromatic aberration correction element that is a combination of a diffraction face and a refraction face. The inventor of this disclosure has provided a document titled "Diffraction Optical Element," Optronics, 1997. A chapter "Chromatic Aberration Correction Lens for Optical Disk" of this document describes a structure employing the disclosed chromatic aberration correction element, to simultaneously correct the axial chromatic aberration and wavelength-error-based spherical aberration.

An optical pickup must make a laser beam follow a track on an optical disk. To realize this, the optical pickup carries out a tracking operation to control the position of an objective lens, which focuses a laser beam on the optical disk. The tracking operation is carried out in a disk diametral direction. A movement of the objective lens in the tracking operation is referred to as a lens shift in this specification.

An optical pickup employing a light source having a wavelength of 450 nm or shorter and an objective lens of 0.7 or greater in NA must have a chromatic aberration correction element as mentioned above. The optical pickup has an actuator to shift the objective lens. The weight of a movable part of the actuator must be restricted to secure a tracking operation band. Due to this, the chromatic aberration correction element is fixed to a frame of the optical pickup.

With this configuration, when the tracking operation shifts the objective lens, an optical axis of the objective lens deviates from that of the chromatic aberration correction element, to cause aberration. Namely, the objective lens causes aberration that is mainly coma aberration, to drastically deteriorate the recording and regenerating performance of the optical pickup on an optical disk.

To cope with the aberration caused by an optical axis deviation between the objective lens and the chromatic aberration correction element, the Japanese Patent Laid-Open Publication No. 6-82725 mentioned above suggests a structure that carries out no correction on spherical aberration and corrects only axial chromatic aberration. This structure, however, involves the problem of carrying out no correction on wavelength-error-based spherical aberration. The original structure of the Japanese Patent Laid-Open Publication No. 6-82725 that simultaneously corrects spherical aberration and focusing errors has also a problem. Namely, the objective lens and chromatic aberration correction element driven with an actuator increase the weight of a movable part of the actuator and makes it impossible to secure a required band for tracking operation.

## SUMMARY OF THE INVENTION

An object of the present invention is to provide an optical pickup capable of correcting and suppressing axial chromatic aberration and wavelength-error-based spherical aberration even when the optical axis of an objective lens of the optical pickup deviates from that of a chromatic aberration corrector installed in the optical pickup.

An aspect of the present invention provides an optical pickup that emits a beam to a track on an optical disk and records and/or regenerates information signals to and/or from the optical disk. The optical pickup has an objective lens whose movement is controlled in a diametral direction of the optical disk, to focus the emitted beam on the track on the optical disk, a chromatic aberration corrector to correct axial chromatic aberration of the objective lens, and a spherical aberration corrector to correct spherical aberration of the objective lens.

The chromatic aberration corrector and spherical aberration corrector are directly or indirectly fixed to a frame of the optical pickup so that the correctors do not move when the objective lens is controlled in the diametral direction of the optical disk. The correctors are provided with no mechanism to move the correctors in a plane orthogonal to an optical axis.

Desirably, the spherical aberration corrector corrects remnant spherical aberration left after correction by the chromatic aberration corrector.

Desirably, the chromatic aberration corrector emits light having a substantially spherical wavefront if the wavelength of incident light deviates from a reference wavelength.

Desirably, the chromatic aberration corrector is made of a convex lens and concave lenses that involve larger dispersion than the convex lens and are bonded to both sides of the convex lens.

Desirably, the refractive indexes of the convex and concave lenses are required to be substantially equal to each other at the reference wavelength but are not required to be strictly equal to each other. Desirably, when the wavelength of incident light to the chromatic aberration corrector is unequal to the reference wavelength, the chromatic aberration corrector emits light having a substantially spherical wavefront.

Desirably, the chromatic aberration corrector is a triplet made of a convex lens of glass material having a large Abbe's number and concave lenses of glass material having a small Abbe's number. Desirably, the glass materials have substantially equal refractive indexes. Desirably, the convex lens is sandwiched between the concave lenses.

Desirably, the convex lens is a biconvex lens having equal radiuses in absolute values.

Desirably, the chromatic aberration corrector is a triplet made of a convex lens of TAF4 having spherical radiuses of 6.5 mm and -6.5 mm and a thickness of 1.0 mm and plano-concave lenses each of TIH14 having a thickness of 1.0 mm. Desirably, the plano-concave lenses are bonded to both sides of the convex lens.

Desirably, design values of the triplet include 1.81695803 as a refractive index of the convex lens, 1.8168461 as a refractive index of each concave lens, ±6.5 mm as the spherical radiuses of the convex lens, and 1.0 mm as a thickness of each lens. These values are specification values, and actual values must desirably be within 5% thereof, more desirably within 3% thereof.

Desirably, the Abbe's number of each concave lens of the triplet must be 40 or below, more desirably, 35 or below, most desirably 30 or below. Desirably, the Abbe's number of the convex lens of the triplet must be 35 or over, more desirably, 40 or over, most desirably 45 or over.

Desirably, the diameter of the convex lens is increased as the difference between the Abbe's number of the convex lens and that of the concave lenses increases.

Desirably, the spherical aberration corrector changes a wavefront of incident light to the objective lens.

Desirably, the spherical aberration corrector is a beam expander to change a parallelism of incident light to the objective lens.

Desirably, the optical pickup employs a light source that emits light of 450 nm or shorter in wavelength and the objective lens has an NA of 0.7 or greater.

The optical pickup according to the present invention with the above-mentioned configuration corrects axial chromatic aberration and wavelength-error-based spherical aberration according to separate principles.

Namely, the axial chromatic aberration, i.e., a focal point variation due to a wavelength variation is corrected by the chromatic aberration corrector that controls the radius of curvature of a wavefront of passing light according to a wavelength. Light passed through the chromatic aberration corrector is a converging wave having a substantially spherical wavefront at a paraxial focal point. This wavefront involves suppressed spherical aberration.

It is desirable that an axial-chromatic-aberration correcting quantity is more excessive than a correction quantity with which an image surface of paraxial rays is unchanged in regard to a wavelength variation. This is because the chromatic aberration corrector of the present invention carries out no correction on wavelength-error-based spherical aberration, and therefore, only aligning the image surface of paraxial rays is insufficient to minimize wavefront aberration. Accordingly, if a wavelength variation occurs, the present invention carries out correction more excessively than a proper correction quantity, to reduce a deviation of longitudinal aberration from a center-wavelength image surface and minimize wavefront aberration.

The chromatic aberration corrector is configured to reduce the radius of curvature of a converging wave if a wavelength is longer than a reference wavelength. This configuration cancels an extended focal length of the objective lens due to the long wavelength, to form an image substantially on a reference-wavelength focal plane. This configuration, therefore, can cope with a sudden wavelength variation or wavelength spreading.

On the other hand, the spherical aberration corrector corrects spherical aberration that is caused by a slow wavelength error due to, for example, laser-diode individuality and temperature fluctuation. The spherical aberration corrector corrects such aberration by changing the parallelism of incident light to the objective lens. Namely, the spherical aberration corrector generates spherical aberration by a magnification error on the objective lens, to cancel the wavelength-error-based spherical aberration in the optical system. With this correction, the light whose parallelism has been changed will have a substantially spherical wavefront.

For a given wavelength variation, the polarity (convergence or divergence) of a spherical wave necessary for correcting axial chromatic aberration is opposite to the polarity of a spherical wave necessary for correcting wavelength-error-based spherical aberration. As explained above, a sudden change in a laser diode wavelength and a range of wavelength spreading due to superimposed high frequencies are small. Within the small range, the axial chromatic aberration is large and the wavelength-error-based spherical aberration is small.

If there is a large wavelength variation or error, it will cause a large increase in wavelength-error-based spherical aberration that must be corrected. This correction is made by changing the parallelism of light. This correction is very slow, or is achieved in initial setting. After this correction, a sudden wavelength variation or fluctuation is handled by the chromatic aberration corrector.

According to the present invention, the chromatic aberration corrector corrects axial chromatic aberration, and the spherical aberration corrector corrects wavelength-error-based spherical aberration. Corrections on the axial chromatic aberration and wavelength-error-based spherical aberration are completed at the objective lens and are irrelevant to the other parts. Accordingly, the present invention can suppress aberration even if an optical axis of the objective lens deviates from an optical axis of the optical system.

Light passed through the chromatic aberration corrector has substantially a spherical wavefront to suppress an aberration increase due to a lens shift. For a spherical wave, a lens shift is equivalent to oblique incident light to the objective lens and corresponds to an image height. The radius of a spherical wavefront to correct chromatic aberration is very large and an image height due to a lens shift is very small, to thereby suppress an aberration increase due to the lens shift.

The spherical aberration corrector also generates a substantially spherical wave by changing parallelism.

Due to the same reason as that mentioned above, the spherical wave from the spherical aberration corrector suppresses aberration caused by a lens shift.

If the wavefront of light from the chromatic aberration corrector greatly deviates from a spherical wavefront, and if the wavefront is provided with the spherical-aberration-correcting wavefront shape, a better result will be obtainable provided that there is no lens shift. If there is a lens shift, a deteriorative result such as coma aberration will occur.

Light from the chromatic aberration corrector to the objective lens will not be parallel at any wavelength except the reference wavelength, to cause spherical aberration due to a magnification error. The spherical aberration due to the magnification error has the same polarity as that of wavelength-error-based spherical aberration caused by a wavelength error in the objective lens itself. As a result, a spherical error at a wavelength other than the reference wavelength is stronger with the chromatic aberration corrector than without the chromatic aberration corrector.

To avoid this problem, the present invention properly sets the chromatic aberration corrector and spherical aberration corrector. Namely, the spherical aberration corrector sets the parallelism of light so as to minimize aberration at a center wavelength. The spherical aberration corrector minimizes spherical aberration of both the chromatic aberration corrector and objective lens. The "center wavelength" is an average of wavelengths that may vary due to laser diode fluctuation.

For a wavelength that slightly deviates from the center wavelength, the chromatic aberration corrector changes the radius of curvature of a wavefront, to minimize a wavefront aberration increase due to axial chromatic aberration.

For any wavelength that is not the reference wavelength, the spherical wave for correcting axial chromatic aberration and the spherical wave for correcting spherical aberration due to a wavefront error or a magnification error have opposite polarities. For example, a wavelength longer than the reference wavelength needs converging light to correct axial chromatic aberration and diverging light to correct spherical aberration.

For this longer wavelength, the present invention generates a wavefront having a curvature to minimize axial chromatic aberration. This may results in changing the degree of convergence in a direction to worsen spherical aberration due to a wavefront error or a magnification error. This spherical aberration worsening, however, is very small compared with aberration due to defocusing (focusing error) that occurs when no correction is made on axial chromatic aberration. Namely, the spherical aberration worsening is not a real problem.

The spherical aberration corrector according to the present invention is naturally able to correct spherical aberration due to objective lens individuality and spherical aberration due to disk thickness errors.

BRIEF DESCRIPTION OF THE DRAWINGS

Figure 1 is a schematic view showing an optical pickup according to an embodiment of the present invention;
Fig. 2 shows an optical path in an optical system of the optical pickup of Fig. 1;
Figs. 3A and 3B show changes in the parallelism of light from a beam expander in the optical pickup of Fig. 1;
Fig. 4 is a graph showing the wavelength dependence of aberration in an optical system in an optical pickup;
Fig. 5 is a graph showing longitudinal aberration when parallel light is made incident to an optical system;
Fig. 6 is a graph showing longitudinal aberration when diverging light having a focal length of 1450 mm is made incident to an optical system;
Fig. 7 is a graph showing longitudinal aberration of an objective lens itself;
Fig. 8 is a graph showing longitudinal aberration of an objective lens with a triplet;
Fig. 9 is a graph showing longitudinal aberration for light having a wavelength of 409 nm;
Fig. 10A shows an optical path in an optical pickup according to another embodiment of the present invention;
Fig. 10B shows a chromatic aberration corrector of the optical pickup of Fig. 10A;
Fig. 11 shows an optical path in an optical pickup according to still another embodiment of the present invention;
Fig. 12 shows a comparison example; and
Fig. 13 is a graph showing longitudinal aberration of an optical system of the comparison example.

DETAILED DESCRIPTION OF EMBODIMENTS

Optical pickups according to embodiments of the present invention will be explained with reference to the accompanying drawings.

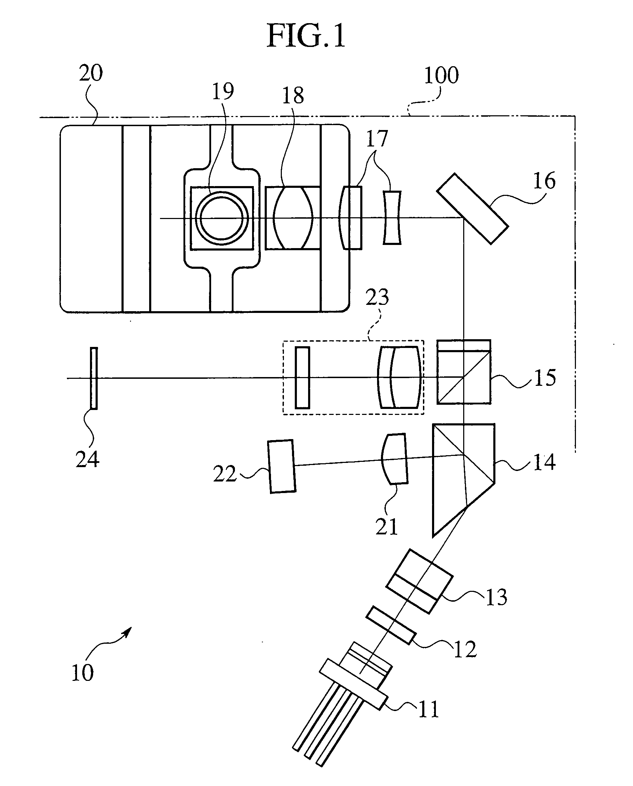

Figure 1 is a schematic view showing the structure of an optical pickup 10 according to an embodiment of the present invention.

The optical pickup 10 emits light to a track on an optical disk (not shown) that is rotating, and records and/or regenerates information signals to and/or from the optical disk. The optical pickup 10 has an objective lens 19 whose movement is controlled to focus light on the track of the optical disk, a triplet 18 serving as a chromatic aberration corrector that is fixed to a frame of the optical pickup 10 and is used to correct chromatic aberration of the objective lens 19, and a beam expander 17 serving as a spherical aberration corrector that is fixed to the frame of the optical pickup 10 and is used to correct spherical aberration of the objective lens 19. The triplet 18 corrects axial chromatic aberration, i.e., an error caused in a focusing direction. The triplet 18, i.e., the chromatic aberration corrector corrects only axial chromatic aberration.

The optical pickup 10 also includes a laser diode 11 serving as a light source to emit a laser beam having a reference wavelength of 403 nm, a grating 12, a collimator lens 13, an achromatic prism 14 for shaping the beam, a polarization beam splitter 15, a mirror 16, the beam expander 17, the triplet 18, the objective lens 19 having a numerical aperture (NA) of 0.7 or greater, and an actuator 20.

The objective lens 19 is supported with the actuator 20. The objective lens 19 and actuator 20 are controlled to move in a diametral direction (tracking direction) of the optical disk, so that a beam from the objective lens may follow the track on the optical disk.

While the objective lens 19 is fixed to the actuator 20, the beam expander 17 and triplet 18 are fixed to the frame 100 of the optical pickup 10 so that they may not move together with the objective lens 19 and actuator 20. More precisely, the beam expander 17 and triplet 18 are directly or indirectly fixed to the frame 100. The beam expander 17 consists of a pair of concave and convex lenses with a distance between the lenses being adjustable. The optical pickup is of a separate head type in which the chromatic aberration corrector (triplet 18) and spherical aberration corrector (beam expander 17) have no movement control mechanism that controls movement in a plane orthogonal to an optical axis.

The beam expander 17 consisting of a pair of concave and convex lenses changes the parallelism of light. The triplet 18 consists of a convex lens and two concave lenses that have larger dispersion than the convex lens and are bonded to both sides of the convex lens. The triplet 18 emits substantially parallel light at the reference wavelength of 403 nm.

When the objective lens 19 is moved (shifted) in the tracking direction, an optical axis of the objective lens 19 deviates from an optical axis of the beam expander 17 and triplet 18.

The optical pickup 10 further includes a condenser lens 21, a front monitor photodiode 22, a detective lens tube 23, and a photodiode 24.

The optical pickup 10 of this embodiment removes aberration of the objective lens 19 through the beam expander 17 that changes the parallelism of light and the triplet 18 that corrects chromatic aberration.

The element to change the parallelism of light is not limited to the beam expander 17, and therefore, the following explanation is mainly made on the triplet 18 and objective lens 19 unless otherwise necessitated. The triplet 18 and objective lens 19 are sometimes referred to as an optical system.

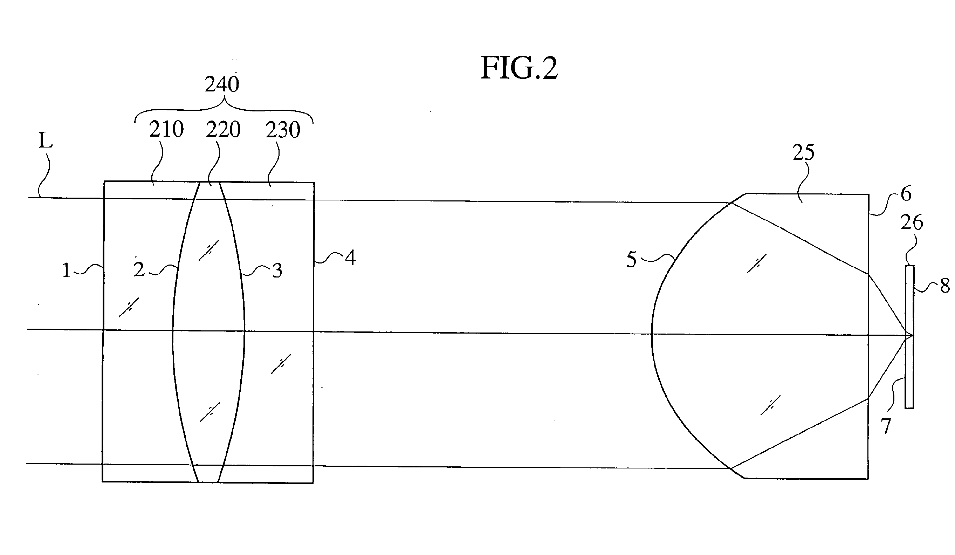

Fig. 2 shows an optical path of the optical system in the optical pickup 10.

A triplet 240 and an objective lens 25 in Fig. 2 correspond to the triplet 18 and objective lens 19 of Fig. 1, respectively. The triplet 240 receives light L emitted from the laser diode 11 serving as a light source.

The triplet 240 consists of a first member 210 made of a first optical material, a second member 220 made of a second optical material, and a third member 230 made of a third optical material. The first to third members are bonded together.

The triplet 240 includes, in a light advancing direction, a first face 1 of the first member 210, a second face 2 where the first and second members 210 and 220 are bonded together, a third face 3 where the second and third members 220 and 230 are bonded together, and a fourth face 4 of the third member 230. The objective lens 25 has fifth and sixth faces 5 and 6.

Table 1 shows specifications of the objective lens 25.

Table 1

| | |
|---|---|
| Design wavelength | 403 nm |
| NA | 0.85 |
| Focal length | 2.20 mm |
| Entrance pupil diameter | 3.74 mm |
| Magnification | 0 |

The fifth and sixth face 5 and 6, which are aspherical, are represented by the following polynomial:

$$Z=CH^2/(1+(1-(1+K)C^2H^2)^{0.5})+AH^4+BH^6+DH^8+EH^{10}+FH^{12}$$

where Z is a distance from the vertex of the surface, C (=1/R) is a curvature at the vertex of the surface, H is a height from an optical axis, K is a conic constant, and A, B, D, E and F are aspherical coefficients of degrees 4 to 12. For example, A is a coefficient for $H^4$

Table 2 shows design values of the optical system.

Table 2

| Face No. | Face shape | Radius | Thickness | Glass | Conic constant |
|---|---|---|---|---|---|
| 1 | Planar | | 1.0 | TIH14 | |
| 2 | Spherical | 6.5 | 1.0 | TAF4 | |
| 3 | Spherical | -6.5 | 1.0 | TIH14 | |
| 4 | | | 5.0 | | |
| 5 | Aspherical | 1.81217 | 3.104 | NBF1 | -0.337179 |
| 6 | Aspherical | -6.507580 | 0.499 | | -845.651557 |
| 7 | | Infinite | 0.1 | Polycarbonate | |
| Image surface | | | | | |

Table 3 shows aspheric coefficients of the fifth face.

Table 3

| Coefficient for $H^4$ | -0.00092006967 |
|---|---|
| Coefficient for $H^6$ | -0.00025706693 |
| Coefficient for $H^8$ | -0.00057872391 |
| Coefficient for $H^{10}$ | 0.0002222827 |
| Coefficient for $H^{12}$ | $-5.6787923 \times 10^{-5}$ |

Table 4 shows aspheric coefficients of the sixth face.

Table 4

| Coefficient for $H^4$ | 0.061448774 |
|---|---|
| Coefficient for $H^6$ | -0.13995629 |
| Coefficient for $H^8$ | 0.12867014 |
| Coefficient for $H^{10}$ | -0.043733069 |

Table 5 shows the refractive indexes and Abbe's numbers of the optical materials.

Table 5

| | Refractive index | Abbe's number |
|---|---|---|
| TIH14 | 1.81686461 | 26.52 |
| TAF4 | 1.81695803 | 47.49 |
| NBF1 | 1.76949134 | 49.22 |
| Polycarbonate | 1.62313588 | 29.91 |

As shown in Table 5, the triplet 240 consists of the second member (convex lens) 220 made of TAF4 and the first and third members (concave lenses) 210 and 230 made of TIH14 that sandwich the second member 220 between them. The dispersion of the first and third members 210 and 230 that are concave lenses is greater than that of the second member 220 that is a convex lens. An inverse of an Abbe's number is an index of dispersion. TIH14 that forms the first and third members 210 and 230 has an Abbe's number of 26.52, and TAF4 that forms the second member 220 has an Abbe's number of 47.49.

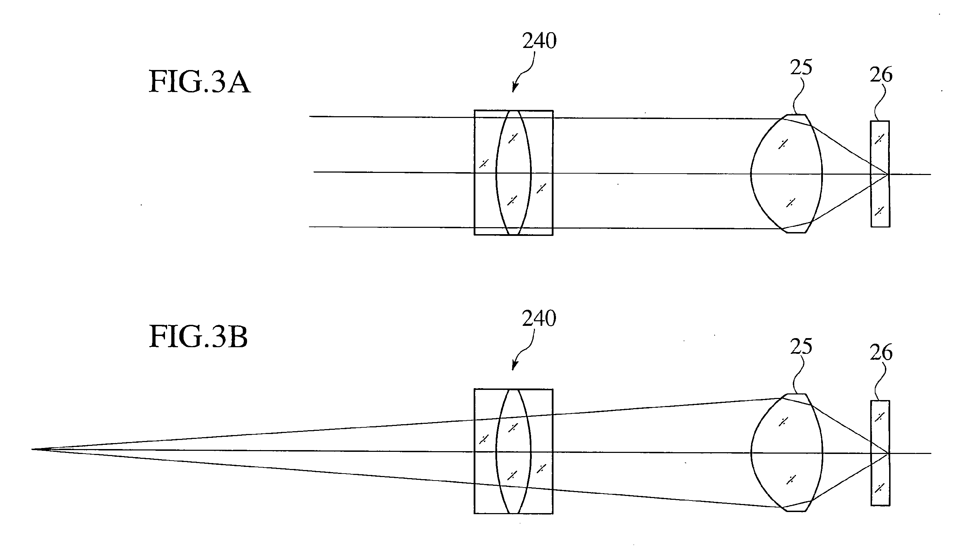

Figures 3A and 3B show changes in the parallelism of light from the beam expander 17.

Figure 3A shows the parallelism of light having the reference wavelength of 403 nm. In this case, the beam expander 17 receives parallel light and emits parallel light. The parallel light from the beam expander 17 passes through the triplet 240 and objective lens 25 and focuses on the optical disk 26.

Figure 3B shows that the beam expander 17 changes the parallelism of light into diffused light to correct spherical aberration.

Light having a wavelength longer than the reference wavelength causes spherical aberration. To suppress the spherical aberration, the diffused light is made incident to the objective lens 25.

Namely, the beam expander 17 changes the parallelism of incident light and emits diffused light. The diffused light from the beam expander 17 passes through the triplet 240 and objective lens 25 and focuses on the optical disk 26.

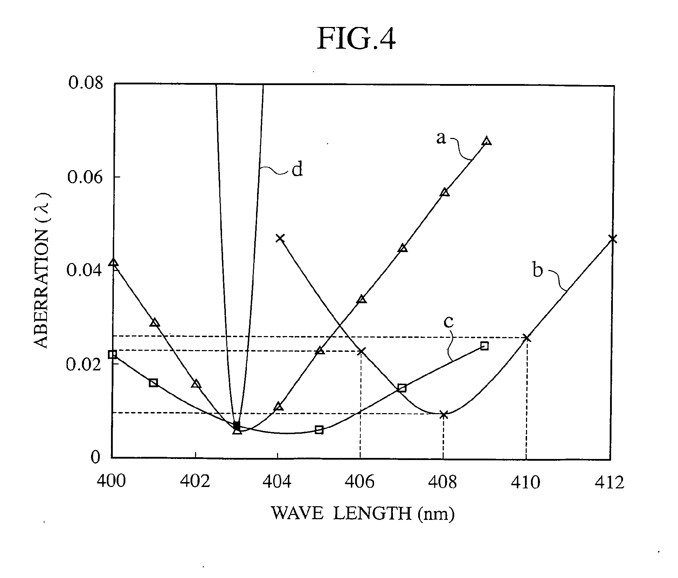

Figure 4 is a graph showing the wavelength dependence of aberration in the optical system of the optical pickup 10.

A curve "a" with triangles represents aberration at different wavelengths passed through the triplet and objective lens, on a best image surface for the reference wavelength of 403 nm. Incident light to the triplet 18 is parallel light. The curve "a" indicates that aberration is sufficiently suppressed in the range of $\pm 2$ to 3 nm around the reference wavelength.

In connection with a lens shift, there will be no aberration increase because the beam from the triplet 18 is substantially parallel, and therefore, the state of incident light to the objective lens is unchanged even with the lens shift.

If the ambient temperature of the optical pickup 10 greatly varies to change the wavelength of a laser beam from the laser diode 11 over the above-mentioned range, or if the wavelength greatly deviates from the reference wavelength of 403 nm due to the individuality of the laser diode 11, there will be an aberration increases. If the wavelength of a laser beam from the laser diode 11 is 408 nm, aberration will be $0.057\lambda$.

In this case, the beam expander 17 changes the parallelism of light. For the light of 408 nm in wavelength, diffused light is emitted to the optical system from about 1450 mm before the optical system, to provide a good result. Figure 3B shows such diffused light made incident to the optical system.

In this case, aberration will be as indicated with a curve "b" with crosses in Fig. 4. At the wavelength of 408 nm, aberration is $0.009\lambda$. The curve "b" indicates that aberration is sufficiently suppressed in the range of $\pm 2$ to 3 nm around the wavelength of 408 nm.

For example, in the range of $\pm 2$ nm around the wavelength of 408 nm, aberration is $0.023\lambda$ at a wavelength of 406 nm and $0.026\lambda$ at a wavelength of 410 nm. These values are satisfactorily low.

If the objective lens 19 is shifted from an optical axis by 0.3 mm during the emission of diffused light of 408 nm in wavelength from the 1450-mm point, the lens shift will cause an aberration increase of $0.01\lambda$. This increase is very small compared with that of no lens shift, and therefore, there will be no performance problem in the optical pickup 10.

Curves "c" with white squares and "d" with black rhombuses represent comparison examples with only the objective lens 19 without correctors such as the triplet 18.

The curve "c" is obtained when the objective lens 19 is used at a best image surface for each wavelength. The curve "d" indicates aberration values for various wavelengths at a best image surface for the reference wavelength of 403 nm. It is apparent from comparison between the curves "c" and "d" that there is large aberration on the best image surface for the reference wavelength of 403 nm.

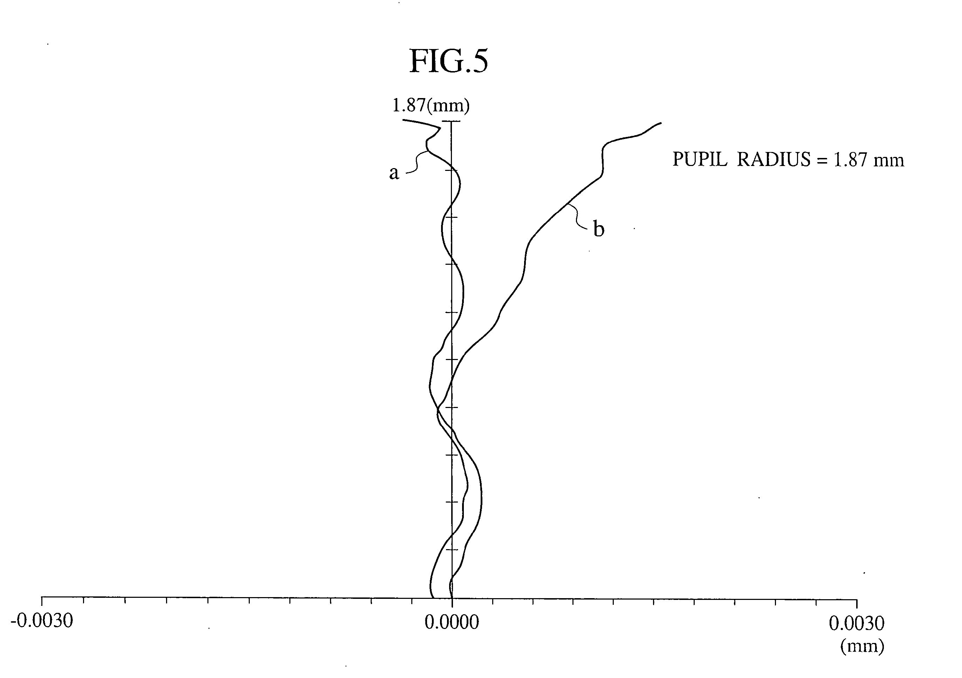

Figure 5 is a graph showing longitudinal aberration with the optical system receiving parallel light.

A curve "a" in Fig. 5 represents aberration at the reference wavelength of 403 nm, and a curve "b" represents aberration at a wavelength of 409 nm. The curve "b" for the wavelength of 409 nm shows that axial chromatic aberration has been corrected and there is large spherical aberration.

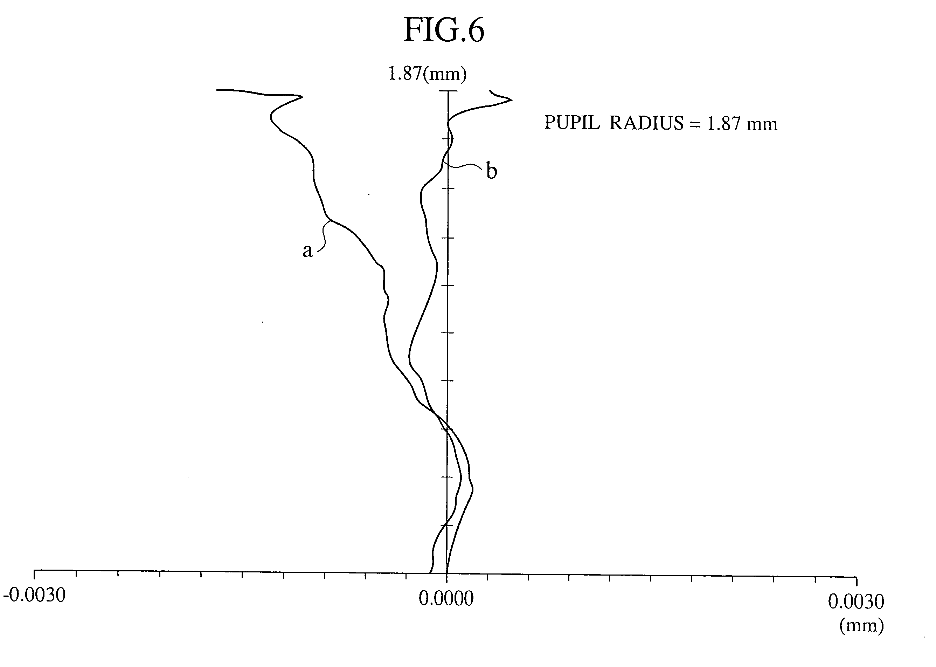

Figure 6 is a graph showing longitudinal aberration with the optical system receiving diffused light at a focal length of 1450 mm. A curve "a" represents aberration for a wavelength of 403 nm, and a curve "b" represents aberration for a wavelength of 409 nm. Comparing with Fig. 5, a great improvement is seen in spherical aberration.

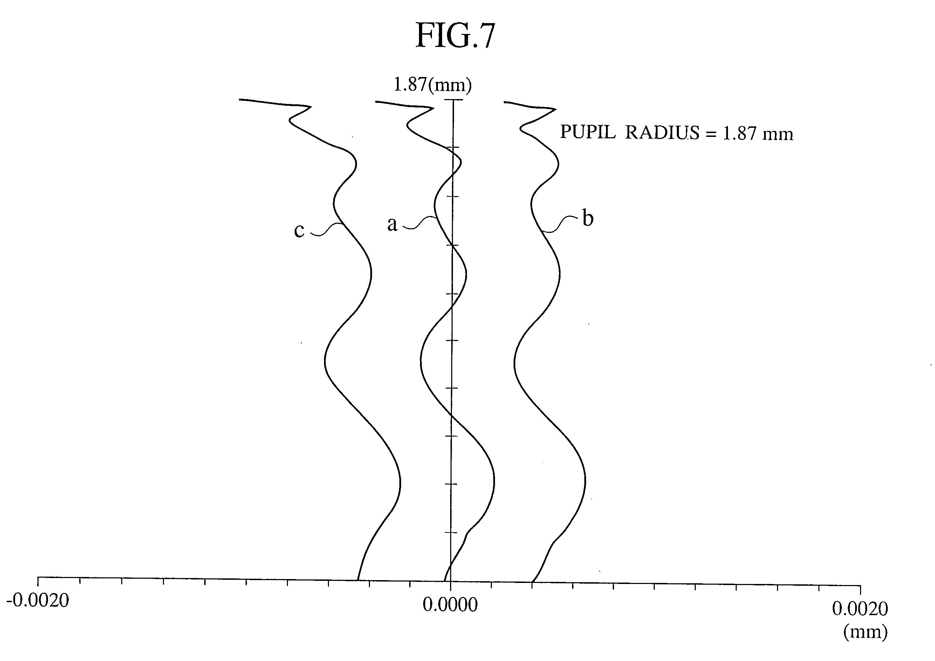

Figure 7 is a graph showing longitudinal aberration with the objective lens being used alone. Curves "a," "b," and "c" represent aberration for wavelengths 402 nm, 403 nm, and 404 nm, respectively. It is seen that focal positions greatly differ depending on the wavelengths.

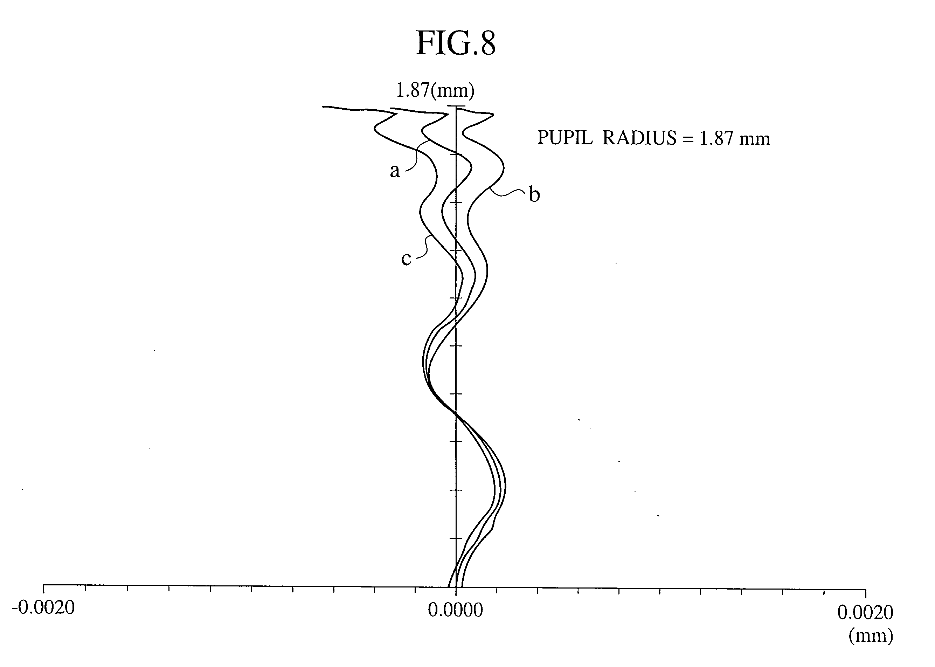

Figure 8 is a graph showing longitudinal aberration with the objective lens being used with the triplet. Comparing with Fig. 7, focal positions are well aligned to show the proper effect of correction by the triplet. According to the embodiment, correction is slightly excessive in connection with paraxial focal positions. This is to cancel changes due to spherical aberration by light having a height.

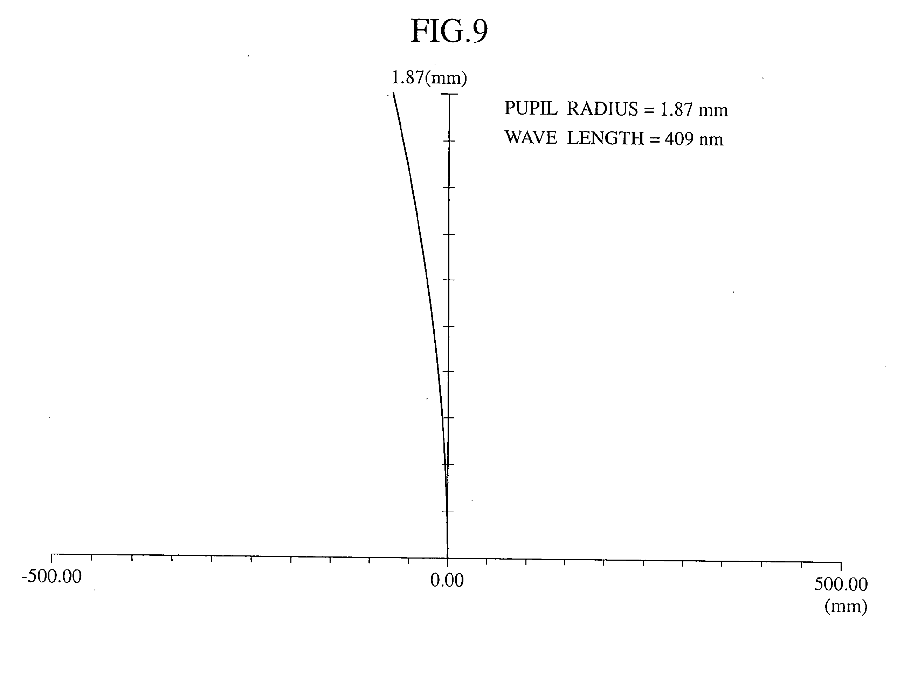

Figure 9 is a graph showing longitudinal aberration for a wavelength of 409 nm with the triplet without the beam expander. The optical system has a focal length of 1641 mm for the wavelength of 409 nm. A maximum height of light in Fig. 9 corresponds to the periphery of the objective lens 19 at an effective diameter. This periphery of the objective lens 19 corresponds to a height of 1.87 mm of light. At this height, longitudinal aberration is about 4% of the focal length. This longitudinal aberration is small. Namely, even if there is a wavelength variation, it mainly causes a change in a focusing direction and produces little spherical aberration. Consequently, the triplet emits light having a substantially spherical wavefront to mainly correct axial chromatic aberration.

A construction of the triplet to correct chromatic aberration of the objective lens, which is a convex lens, will be explained. When designing the triplet, glass materials having similar refractive indexes for a reference wavelength are chosen, so that the triplet may emit substantially parallel light. A glass material having large dispersion is employed for the concave lenses of the triplet, and a glass material having small dispersion is employed for the convex lens of the triplet. With these glass materials, the concave lenses show a larger refractive index when the wavelength becomes shorter, to cancel a focusing error of the objective lens.

The refractive indexes of the convex and concave lenses for the reference wavelength are not necessary to be precisely equal to each other. If incident light to the objective lens is not parallel, it will cause spherical aberration. This spherical aberration can be corrected by the beam expander. Accordingly, the triplet may involve slightly different refractive indexes to produce light that is not parallel. The triplet has planar end faces, and therefore, is easy to manufacture. According to an embodiment of the present invention, the radiuses of both end faces of the center lens of the triplet are set to be equal to each other for easy manufacturing. Even if these radiuses slightly differ from each other with the power (focal lengths) of the concave lenses of the triplet being maintained, the effect of correcting chromatic aberration will be maintained. However, the difference between these radiuses must be small to produce a clear spherical wavefront with respect to a wavelength variation.

If there is a large refractive index difference between the glass materials, both end faces of the triplet may be shaped into spherical to emit parallel light.
The triplet of this configuration with three lenses also provides a spherical wave to cope with a wavelength error.

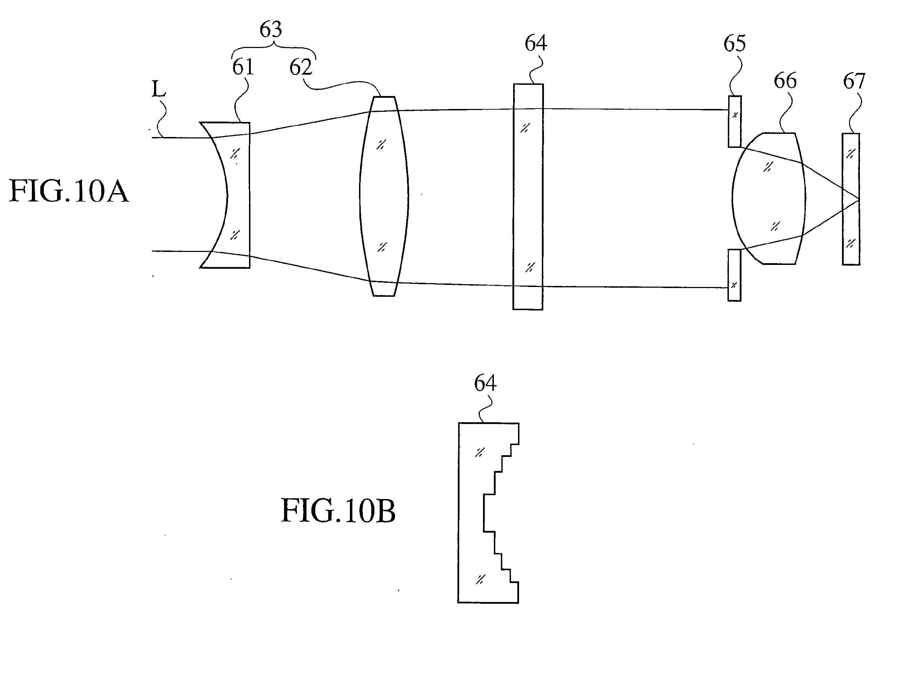

Figure 10A shows an optical path of an optical pickup according to another embodiment of the present invention and Fig. 10B shows a chromatic aberration corrector of this optical pickup.

This embodiment is based on the optical pickup 10 of Fig. 1 provided with the chromatic aberration corrector 64, which is a combination of a diffraction face and a refraction face, to produce a wavefront like the one provided by the triplet 18.

In Fig. 10A, an optical system of this embodiment includes a beam expander 63 consisting of a concave lens 61 and a convex lens 62, the chromatic aberration corrector 64, an iris 65, and an objective lens 66.

The beam expander 63 and objective lens 66 correspond to the beam expander 17 and objective lens 19 of Fig. 1, respectively. The chromatic aberration corrector 64 provides the same function as the triplet 18 of Fig. 1. The iris 65 restricts the height of light coming from the chromatic aberration corrector 64 into the objective lens 66.

A laser diode serving as a light source emits light L. The beam expander 63 changes the parallelism of the light L, the chromatic aberration corrector 64 provides the light L with a spherical wavefront, and the objective lens 66 focuses the light on an optical disk 67.

Figure 10B is an enlarged view roughly showing the chromatic aberration corrector 64. The chromatic aberration corrector 64 has a stepped surface. A difference between the steps is 1 μm or below. The chromatic aberration corrector 64 in Fig. 10B has only few steps for the sake of simplicity of the drawing. In practice, the number of the steps is several tens or more.

The chromatic aberration corrector 64 may be the one disclosed in the Japanese Patent Laid-Open Publication No. 6-82725 having a zone structure to produce a wavefront that corrects axial chromatic aberration. The chromatic aberration corrector 64 may have separate diffraction and refraction faces.

The chromatic aberration corrector employing a diffraction element is well known and is described in the above-mentioned disclosure in detail, and therefore, the details thereof will not be explained here.

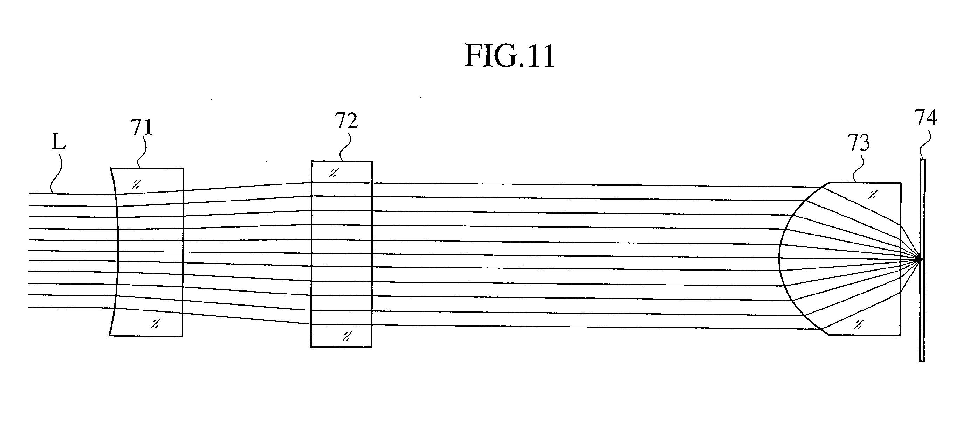

Figure 11 shows an optical path in an optical pickup according to still another embodiment of the present invention.

This embodiment is based on the optical pickup 10 of Fig. 1 with the convex lens of the beam expander 17 and the triplet 18 of Fig. 1 being combined together.

Namely, a concave lens 71 and an element 72 of Fig. 11 correspond to the concave and convex lenses of the beam expander 17 and the triplet 18 of Fig. 1.

The element 72 has a convex lens made from a diffraction face and facing an objective lens 73. This convex lens and the concave lens 71 operate to change the parallelism of light.

The convex lens mentioned above may be a combination of a diffraction lens and a convex lens. Alternatively, the convex lens may be an element having diffraction elements on both sides thereof with one of the diffraction elements having a longer focal length and a zone structure thereof having wider pitches to make the production thereof easier.

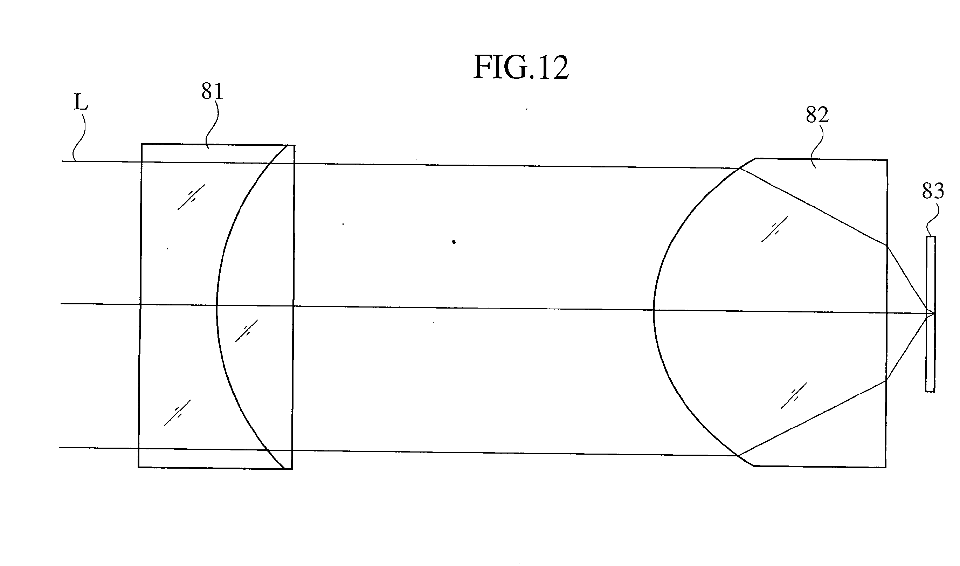

Figure 12 shows a comparison example for the present invention.

The comparison example employs a doublet 81 instead of the triplet 18 of the optical pickup 10 of Fig. 1. Namely, the doublet 81 corresponds to the triplet 18 of Fig. 1, and an objective lens 82 corresponds to the objective lens 19 of Fig. 1.

Table 6 shows design values of the doublet 81.

Table 6

| Face No. | Face shape | Radius | Thickness | Glass |
|----------|-----------|--------|-----------|-------|
| 1 | Planar | | 1.0 | TIH14 |
| 2 | Spherical | 2.9 | 1.0 | TAF4 |

If there is no lens shift, the doublet 81 of the comparison example may sufficiently correct chromatic aberration. If the wavelength deviates from a reference wavelength to trigger a lens shift, the comparison example increases aberration.

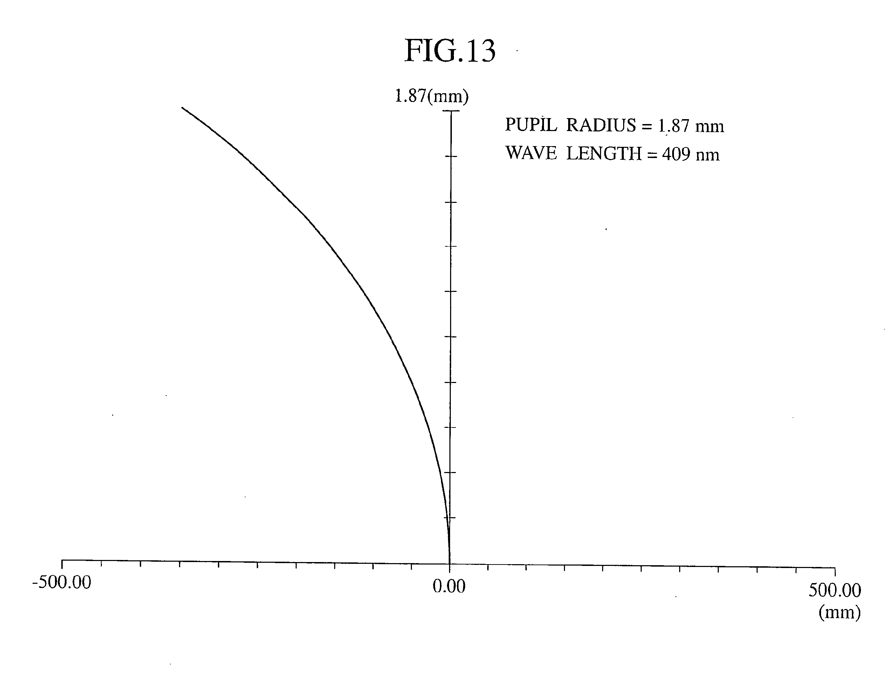

Figure 13 is a graph showing longitudinal aberration of an optical system of the comparison example.

This graph is for a wavelength of 409 nm applied to the optical system having the doublet 81 without a beam expander. The doublet 81 has a focal length of 1464 mm for the wavelength of 409 nm. At a beam height of 1.87 mm corresponding to the periphery of an effective diameter of the objective lens 82 (corresponding to the maximum beam height of Fig. 9), the longitudinal aberration is about 24% of the focal length. This value is very high. Namely, the comparison example produces very large spherical aberration if a wavelength error occurs and worsens the aberration if there is a lens shift.

The shape of the spherical aberration is adjustable by making a joint face of the doublet 81 aspherical, to reduce wavelength-error-based spherical aberration.

This structure may improve the curve "a" of Fig. 4 to the curve "c." This structure, however, is vulnerable to a lens shift, and therefore, the doublet 81 must be mounted on an actuator together with the objective lens 82. Mounting both the doublet 81 and objective lens 82 on an actuator makes it difficult to secure a frequency characteristic for tracking operation. In addition, the mounting accuracy of the doublet 81 on the actuator must be of 10-micron order, to make the manufacturing thereof difficult.

In terms of spherical-aberration correction, the above explanation mainly relates to correcting wavelength-error-based spherical aberration. The optical system according to the present invention, however, is not limited to correcting the wavelength-error-based spherical aberration. It is also applicable to simultaneously correcting residual spherical aberration of an objective lens itself and spherical aberration due to an error in the thickness of an optical disk.

According to the present invention, there is no need of mounting a chromatic aberration corrector on an actuator of an optical pickup, and therefore, the present invention is effective to reduce the weight of the actuator and improve the frequency characteristics of the actuator.

Although the invention has been described above by reference to certain embodiments of the invention, the invention is not limited to the embodiments described above. Modifications and variations of the embodiments described above will occur to those skilled in the art, in light of the above teachings. The scope of the invention is defined with reference to the following claims.

**Claims**

1. An optical pickup that emits light to a track on an optical disk and records and/or regenerates information signals to and/or from the optical disk, comprising:

   an objective lens that focuses emitted light on the track of the optical disk, wherein the movement of the objective lens is controlled in a diametral direction of the optical disk;
   a chromatic aberration corrector that corrects axial chromatic aberration of the objective lens; and
   a spherical aberration corrector that corrects spherical aberration of the objective lens.

2. The optical pickup of claim 1, wherein the chromatic aberration corrector and spherical aberration corrector are directly or indirectly fixed to a frame of the optical pickup so that the correctors do not move when the objective lens is controlled in the diametral direction of the optical disk, or the chromatic aberration corrector and spherical aberration corrector are provided with no mechanism to move the correctors in a plane orthogonal to an optical axis.

3. The optical pickup of claim 1, wherein the spherical aberration corrector corrects residual spherical aberration left after correction by the chromatic aberration corrector.

4. The optical pickup of claim 1, wherein the chromatic aberration corrector provides light having a substantially spherical wavefront if the wavelength of incident light deviates from a reference wavelength.

5. The optical pickup of claim 1, wherein the chromatic aberration corrector is made of a convex lens and concave lenses that involve larger dispersion than the convex lens and are bonded to both sides of the convex lens.

6. The optical pickup of claim 1, wherein the spherical aberration corrector changes the wavefront of incident light to the objective lens.

7. The optical pickup of claim 1, wherein the spherical aberration corrector is a beam expander to change the parallelism of incident light to the objective lens.

8. The optical pickup of claim 1, wherein the emitted light has a wavelength of 450 nm or shorter, and the objective lens has a numerical aperture of 0.7 or greater.

# FIG.1

# FIG.2

EP 1 345 216 A2

FIG.3A

FIG.3B

# FIG.4

FIG.5

1.87(mm)

PUPIL RADIUS = 1.87 mm

a

b

-0.0030

0.0000

0.0030

(mm)

FIG.6

PUPIL RADIUS = 1.87 mm

1.87(mm)

b

a

0.0030
(mm)

0.0000

-0.0030

# FIG.7

1.87(mm)

PUPIL RADIUS = 1.87 mm

c ⟋ a ⟋ b

-0.0020                    0.0000                    0.0020
                                                      (mm)

EP 1 345 216 A2

## FIG.8

1.87(mm)

PUPIL RADIUS = 1.87 mm

a

b

c

-0.0020

0.0000

0.0020

(mm)

# FIG.9

1.87(mm)

PUPIL RADIUS = 1.87 mm

WAVE LENGTH = 409 nm

-500.00

0.00

500.00
(mm)

EP 1 345 216 A2

FIG.10A

FIG.10B

FIG.11

FIG.12

# FIG.13

1.87(mm)

PUPIL RADIUS = 1.87 mm
WAVE LENGTH = 409 nm

-500.00          0.00          500.00
                              (mm)

EP 1 345 216 A2